# EUROPÄISCHE PATENTANMELDUNG

(11) **EP 1 413 790 A1**
(43) Veröffentlichungstag der Anmeldung: **28.04.2004**
(21) Anmeldenummer: 03022356.4
(22) Anmeldetag: 04.10.2003
(51) Int. Cl.: F16D 3/74

(54) **Elastische Kupplung**

(30) Priorität: 24.10.2002 DE 20216820 U
(71) Anmelder: Stromag AG, 59425 Unna (DE)
(72) Erfinder: Bittner, Heinrich, 59174 Kamen (DE); Dorok, Günter, 59174 Kamen (DE); Kerstin, Gunther, 59494 Soest (DE)
(74) Vertreter: Patentanwälte Ruff, Wilhelm, Beier, Dauster & Partner

(57) **Zusammenfassung**

1. Elastische Kupplung.
2.1. Eine elastische Kupplung mit zwei Kupplungsteilen, die durch wenigstens ein elastisches Reifensegment miteinander verbunden sind, wobei das wenigstens eine Reifensegment an seinen gegenüberliegenden Randbereichen durch Befestigungsmittel an jedem Kupplungsteil eingespannt ist, ist bekannt.
2.2. Erfindungsgemäß sind die Randbereiche des wenigstens einen Reifensegmentes relativ zu einer Kupplungsdrehachse radial eingespannt.
2.3. Einsatz für Antriebsstränge von Maschinen.

## Beschreibung

Die Erfindung betrifft eine elastische Kupplung mit zwei Kupplungsteilen, die durch wenigstens ein elastisches Reifensegment miteinander verbunden sind, wobei das wenigstens eine Reifensegment an seinen gegenüberliegenden Randbereichen durch Befestigungsmittel an jedem Kupplungsteil eingespannt ist.

Eine derartige elastische Kupplung ist durch die Periflex®-Reifenkupplung der Anmelderin seit langem bekannt. Die Reifenkupplung dient insbesondere dazu, Winkelversatz sowie Schwingungen zwischen zwei miteinander zu verbindenden Wellen auszugleichen. Jeder Welle ist jeweils ein metallischer Kupplungsteil zugeordnet, der jeweils im wesentlichen rotationssymmetrisch gestaltet ist. Die beiden metallischen Kupplungsteile sind durch ein ringförmiges Reifensegment miteinander verbunden, das aus Gummi hergestellt ist. Das Reifensegment weist ein U-förmiges Querschnittsprofil auf, wobei der offene Bereich des Reifensegmentes in montiertem Zustand nach innen weist. Die Randbereiche des Reifensegmentes sind an jedem Kupplungsteil axial eingespannt, d.h. die Klemmkräfte auf die Randbereiche wirken achsparallel zu einer Drehachse des jeweiligen Kupplungsteiles. Das Reifensegment ist axial geschlitzt, um durch Aufweiten des Reifensegmentes ein radiales Montieren auf die bereits wellenseitig montierten Kupplungsteile zu ermöglichen. Die Randbereiche des Reifensegmentes sind jeweils drehschlüssig und axial fixiert an jedem Kupplungsteil eingespannt.

Aufgabe der Erfindung ist es, eine elastische Kupplung der eingangs genannten Art zu schaffen, die eine vereinfachte und platzsparende Montage ermöglicht.

Diese Aufgabe wird dadurch gelöst, dass die Randbereiche des wenigstens einen Reifensegmentes relativ zu einer Kupplungsdrehachse radial eingespannt sind. Aufgrund der radialen Einspannung werden auch Montage- oder Demontagekräfte radial aufgebracht, so dass in axialer Richtung kein Raum für Montage oder Demontage benötigt wird. Dadurch ist es möglich, auch bei sehr beengten Raumverhältnissen einen Austausch des wenigstens einen Reifensegmentes zu ermöglichen, ohne dass die übrigen Elemente der Kupplung oder die übrigen Elemente des Antriebs- oder Kraftübertragungsstranges ausgebaut werden müssen. Insbesondere ist es möglich, beim Einsatz der elastischen Kupplung in Maschinen, bei denen der entsprechende Antriebs- oder Kraftübertragungsstrang relativ schwer zugänglich ist, einen Austausch des Reifensegmentes, insbesondere auch durch ein Fenster bei geschlossener Maschine, vorzunehmen. Montage und Demontage der erfindungsgemäßen Kupplung sind somit erheblich vereinfacht. Das Reifensegment ist in jedem Fall ein offenes Ringsegment. Falls nur ein Reifensegment vorgesehen ist, so ist das Ringsegment nahezu über seinen gesamten Umfang geschlossen und lediglich im Bereich eines Schlitzes offen. Aufgrund der Elastizität des Reifensegmentes kann das Reifensegment somit im Bereich dieses Schlitzes aufgeweitet und auf die entsprechenden Kupplungsteile aufgeschoben werden. Durch die Elastizität des Reifensegmentes zieht sich dieses nach dem radialen Aufsetzen auf die Kupplungsteile automatisch wieder in seine zusammengezogene Ausgangslage zurück, so dass ein nahezu geschlossener Reifen erreicht wird.

In Ausgestaltung der Erfindung ist das wenigstens eine Reifensegment als Elastomer, insbesondere als Gummielement, mit integrierter Gewebeverstärkung gestaltet. Dadurch wird eine Erhöhung der Stabilität und der Lebensdauer des Reifensegmentes erzielt. Das Reifensegment kann somit auch hohen Belastungen ausgesetzt werden. Vorzugsweise ist die wenigstens eine Gewebeeinlage, die die Gewebeverstärkung bildet, in das Gummielement einvulkanisiert, wobei durch entsprechende Ausrichtung der Gewebefäden die Kraftübertragungseigenschaften des Reifensegmentes je nach dem geforderten Einsatzzweck bei der Herstellung des Reifensegmentes variiert werden können. Durch unterschiedliche Laufrichtungen der Gewebeeinlage sind insbesondere reduzierte oder erhöhte Elastizitäten in Umfangsrichtung oder in Axialrichtung der Kupplung erzielbar.

In weiterer Ausgestaltung der Erfindung sind die Befestigungsmittel zur radialen Einspannung des Reifensegmentes kraftschlüssig als Klemmmittel gestaltet. Falls lediglich ein einzelnes, sich nahezu über den gesamten Kupplungsumfang erstreckendes Reifensegment vorgesehen ist, sind vorzugsweise zur Einspannung der Randbereiche des Reifensegmentes über den Umfang verteilt jeweils mehrere, ringsegmentförmige Klemmbacken vorgesehen, die in radialer Richtung verstellbar sind, um eine entsprechende Klemmung oder Freigabe der Randbereiche des Reifensegmentes zu erzielen. Jeder Kupplungsteil weist somit mehrere Klemmbacken auf, die in Umfangsrichtung aneinanderschließend angeordnet sind.

In weiterer Ausgestaltung der Erfindung weisen die Befestigungsmittel formschlüssig wirksame Sicherungselemente auf. Durch die Sicherungselemente wird zusätzlich zu der Klemmkraft noch ein formschlüssiger Rückhalt der Randbereiche des wenigstens einen Reifensegmentes erreicht. Vorzugsweise sind in den Randbereichen des Reifensegmentes Durchtritte oder Aussparungen vorgesehen, durch die oder in die die Sicherungselemente greifen.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt eine erste Ausführungsform einer erfindungsgemäßen Kupplung in einer Längsschnittdarstellung,
- Fig. 2: die Kupplung nach Fig. 1 in einer Querschnittsdarstellung auf Höhe von formschlüssig wirksamen Sicherungselementen,
- Fig. 3: eine weitere Ausführungsform einer erfindungsgemäßen Lösung ähnlich Fig. 1, ebenfalls in einer Längsschnittdarstellung und
- Fig. 4: die Kupplung nach Fig. 3 in einer Querschnittsdarstellung auf Höhe von Befestigungsmitteln für das Reifensegment.

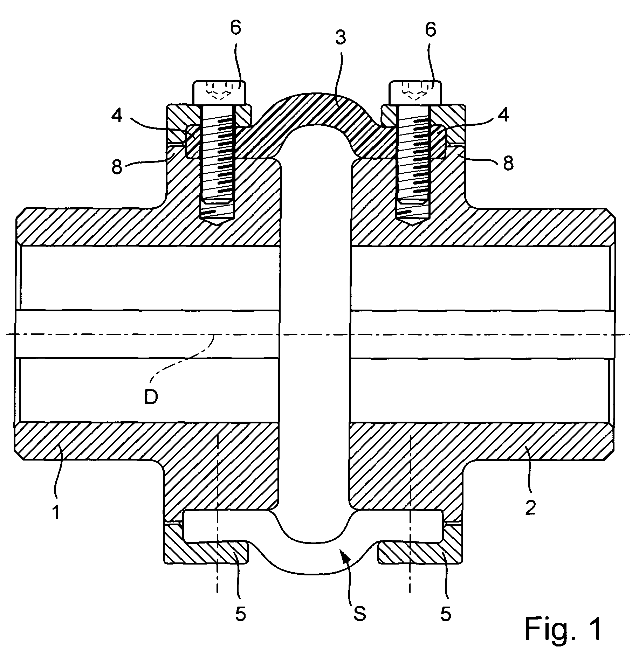

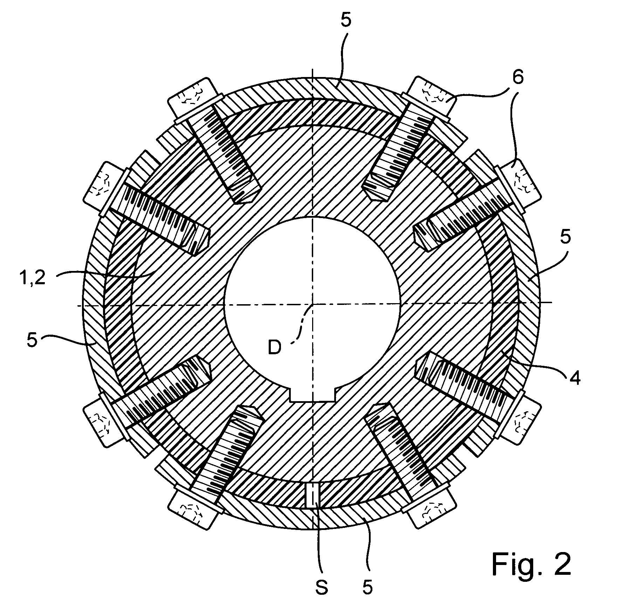

Eine elastische Reifenkupplung gemäß den Fig. 1 und 2 weist zwei Kupplungsteile 1, 2 auf, die jeweils aus Metall bestehen und im wesentlichen rotationssymmetrisch zu einer Drehachse D gestaltet sind. Jeder Kupplungsteil 1, 2 wird in einer Funktion als Wellennabe auf jeweils ein nicht dargestelltes Wellenende eines Antriebs- oder Kraftübertragungsstranges einer Maschine axial aufgeschoben und durch eine Nut-/ Feder-Verbindung drehschlüssig auf der jeweiligen Welle gesichert.

Die beiden Kupplungsteile 1, 2 sind durch ein Reifensegment 3 miteinander verbunden, das mit wenigstens einer Gewebeeinlage zur Verstärkung des Gummimaterials versehen ist. Es handelt sich somit bei dem Reifensegment 3 um einen Gummigewebereifen. Das Reifensegment 3 erstreckt sich, wie anhand der Fig. 2 erkennbar ist, über nahezu den gesamten Kupplungsumfang und ist lediglich an einer Stelle mit einem axial durchgehenden Schlitz S versehen, wodurch das Reifensegment 3 als offener Ring gestaltet ist. Das Reifensegment 3 weist ein C-artiges Querschnittsprofil auf, wobei der offene Bereich des Querschnittsprofils im montierten Zustand des Reifensegmentes 3 radial nach innen gerichtet ist. Zudem weist das Reifensegment 3 auf seinen gegenüberliegenden Seiten zwei umlaufende Randbereiche 4 auf, die zu den gegenüberliegenden Seiten axial abragen. Die ringförmigen Randbereiche 4 liegen auf korrespondierenden Ringschultern der Kupplungsteile 1, 2 gemäß Fig. 1 radial auf, wobei jeder Kupplungsteil 1, 2 auch einen axial wirksamen Ringbund 8 aufweist. Jeder Ringbund 8 stützt eine Stirnkante des jeweiligen Randbereiches 4 axial ab, so dass für jeden Randbereich 4 des Reifensegmentes 3 eine definierte Auflage auf dem jeweiligen Kupplungsteil 1, 2 erzielt wird.

Jeder Randbereich 4 wird radial eingespannt, indem von außen her auf den jeweiligen Randbereich 4 mehrere Klemmsegmente 5 aufgesetzt sind, die radial nach innen wirkende Klemmkräfte auf den jeweiligen Randbereich 4 ausüben. Wie anhand der Fig. 2 erkennbar ist, sind insgesamt vier Klemmsegmente 5 gleichmäßig über den Umfang des jeweiligen Randbereiches 4 verteilt angeordnet, die jeweils kreisringsegmentartig gestaltet sind und flächig auf der gekrümmten Außenkontur des jeweiligen Randbereiches 4 aufliegen. Jedes Klemmsegment 5 ist durch jeweils zwei Sicherungsschrauben 6, die radial zur Drehachse D ausgerichtet sind, auf dem Reifensegment festgeklemmt. Die Sicherungsschrauben 6 durchdringen von außen nach innen die Klemmsegmente 5 sowie den jeweiligen Randbereich 4 und sind in radial ausgerichtete Gewindebohrungen in dem jeweiligen Kupplungsteil 1, 2 eingeschraubt. Um die Durchdringung der Sicherungsschrauben 6 durch den jeweiligen Randbereich 4 hindurch zu ermöglichen, sind beide Randbereiche 4 mit zylindrischen Durchtritten auf Höhe der jeweiligen Sicherungsschrauben 6 versehen. Die Sicherungsschrauben 6 bilden somit in axialer Richtung ergänzend zur Klemmkraft der Klemmsegmente 5 einen formschlüssigen Rückhalt für die Randbereiche 4 und damit für das Reifensegment 3. Die Klemmkraft der Klemmsegmente 5 ist durch entsprechende Ausgestaltung der Anziehmomente der Sicherungsschrauben 6 variierbar und einstellbar.

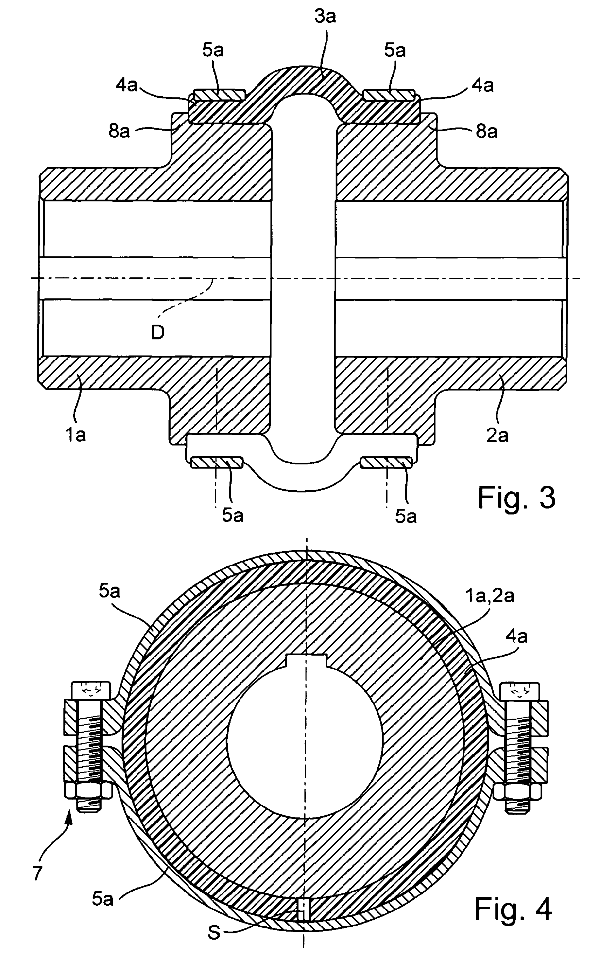

Die elastische Reifenkupplung nach den Fig. 3 und 4 entspricht im wesentlichen der zuvor anhand der Fig. 1 und 2 beschriebenen Reifenkupplung. Funktionsgleiche Teile oder Abschnitte sind daher mit den gleichen Bezugszeichen, lediglich unter Hinzufügung des Buchstaben a versehen. Wesentlicher Unterschied bei der Reifenkupplung gemäß den Fig. 3 und 4 ist es, dass die Randbereiche 4a des Reifensegmentes 3a ausschließlich kraftschlüssig radial eingespannt sind. Die Randbereiche 4a weisen demzufolge keine Durchtritte oder Aussparungen auf. Die Randbereiche 4a sind durch jeweils zwei halbschalenartige Klemmbügel 5a beaufschlagt, die sich jeweils über die Hälfte des Umfangs des Reifensegmentes 3a erstrecken. Die Klemmbügel 5a sind auf gegenüberliegenden Seiten durch jeweils eine entsprechende Spannverbindung 7 miteinander verbunden. Die Spannverbindung 7 ist jeweils als Schraubverbindung gestaltet. Durch das Zusammenziehen der beiden Klemmbügel 5a wird die gewünschte Klemmwirkung auf den jeweiligen Randbereich 4a des Reifensegmentes 3a erzielt. Anhand der Fig. 3 ist erkennbar, dass eine Außenfläche jedes Randbereiches 4a mit einer nutartigen Vertiefung versehen ist, in die der jeweilige Klemmbügel 5a unter Erzielung eines gewissen axialen Formschlusses eingebettet ist. Zusätzlich zu der Klemmwirkung wird somit auch ergänzend ein gewisser axialer Formschluss erzielt. Auch das Reifensegment 3a ist als Gummigewebereifen analog der Ausführungsform nach den Fig. 1 und 2 gestaltet.

## Patentansprüche

1. Elastische Kupplung mit zwei Kupplungsteilen, die durch wenigstens ein elastisches Reifensegment miteinander verbunden sind, wobei das wenigstens eine Reifensegment an seinen gegenüberliegenden Randbereichen durch Befestigungsmittel an jedem Kupplungsteil eingespannt ist,
**dadurch gekennzeichnet,dass**
die Randbereiche (4, 4a) des wenigstens einen Reifensegmentes (3, 3a) relativ zu einer Kupplungsdrehachse (D) radial eingespannt sind.

2. Kupplung nach Anspruch 1, **dadurch gekennzeichnet, dass** das wenigstens eine Reifensegment (3, 3a) als Elastomer, insbesondere als Gummielement, mit integrierter Gewebeverstärkung gestaltet ist.

3. Kupplung nach Anspruch 1, **dadurch gekennzeichnet, dass** die Befestigungsmittel (5, 5a, 6, 7) zur radialen Einspannung des Reifensegmentes (3, 3a) kraftschlüssig als Klemmmittel gestaltet sind.

4. Kupplung nach Anspruch 3, **dadurch gekennzeichnet, dass** die Befestigungsmittel formschlüssig wirksame Sicherungselemente (6) aufweisen.
